# EUROPEAN PATENT APPLICATION

(11) **EP 2 077 393 A1**
(43) Date of publication of application: **08.07.2009**
(21) Application number: 08394003.1
(22) Date of filing: 03.01.2008
(51) Int. Cl.: F03D 1/00, F03D 3/00, F03D 9/00, F03B 13/10, F03B 13/14, F03B 13/18, F03B 17/06

(54) **Planing power generator**

(71) Applicant: Molloy, Padraig, Co. Galway (IE)
(72) Inventor: Molloy, Padraig, Co. Galway (IE)
(74) Representative: Lucey, Michael

(57) **Abstract**

A power generation system suitable for converting wind and wave energy into movement of a drive train comprises a hull adapted for being anchored, drive means supported on the hull and adapted to drive a wave energy capture assembly supported on the hull, the wave energy capture assembly comprising a plurality of floats mounted radially about a shaft for rotation with the shaft, and a drive train operatively connected to the shaft. The wave energy capture assembly is disposed with respect to the hull such that when the system is in the water the floats rotate with the shaft and dip into the water, wherein the floats are driven forward by the action of the waves and accelerated to wave speed. The drive means may comprise a wind energy capture assembly such as a turbine or wind vane. The anchored hull suitably comprises a pair of spaced apart hulls, and the wind and wave energy capture assemblies and the drive train are suitably mounted between the hulls.

## Description

### Introduction

The invention relates to a power generation system for converting wind and wave energy into movement of a drive train. In particular, the invention relates to an electricity generation system.

### Statements of Invention

According to the invention there is provided a power generation system suitable for converting wind and wave energy into movement of a drive train comprising a hull adapted for being anchored, drive means supported on the hull and adapted to drive a wave energy capture assembly supported on the hull, the wave energy capture assembly comprising a plurality of floats mounted radially about a shaft for rotation with the shaft, and a drive train operatively connected to the shaft,
wherein the wave energy capture assembly is disposed with respect to the hull such that when the system is in the water the floats rotate with the shaft and dip into the water, wherein the floats are driven forward by the action of the waves and accelerated to wave speed.

In a preferred embodiment of the invention, the drive means comprises a wind energy capture assembly such as, for example, a rotor or turbine type wind energy capture device. Suitably, the wind energy capture assembly is operatively connected to the wave energy capture assembly by means of a direct drive system. Suitable direct drive systems will be well known to those skilled in the art such as, for example, chain drive and gearbox, a drive shaft, a belt drive and a hydraulic drive.

In an alternative embodiment, the wind energy capture assembly powers an electric motor operatively connected to the shaft of the wave energy capture assembly for rotation thereof at an optimal speed for wave/float interaction.

In an alternative embodiment an external source of power is provided to the vessel and used to rotate the wave energy capture assembly at an optimal speed for wave/float interaction. For example, the electricity grid could be employed to drive the wave energy shaft and eliminate the wind as the catalyst.

In an alternative embodiment an external source of power is used to rotate the wave energy capture assembly at an optimal speed for wave/float interaction. Examples would be solar power, consumable fuel motors, etc.

In one embodiment, the anchored hull comprises a pair of spaced apart hulls (ideally in the manner of a catamaran), and wherein wind and wave energy capture assemblies and the drive train are mounted between the hulls.

In a preferred embodiment of the invention, the floats are mounted on the shaft for radial movement towards and away from the shaft in response to the height of the waves. Suitably, the floats are biased away from the shaft, wherein movement of the float against the bias generates energy which is employed to contribute to shaft rotation. Typically, the energy generated is captured by an energy storage and capture means such as, for example, a hydraulic cylinder, a pneumatic cylinder, and a linear drive mechanism.

In one embodiment, the floats are biased away from the shaft by means of a hydraulic cylinder which is operatively connected to a hydraulic motor.

In one embodiment of the invention, the power generation system includes a wind flow optimisation system that shields the floats and/or wind energy capture assembly from negative wind loading. In one embodiment, this is provided by a baffle which optimises wind loading to the wind energy capture and wave energy capture assemblies.

In a preferred embodiment of the invention, the floats are cylindrical having a circular cross section. However, other shapes of floats are possible such as oval or having a hull or surface profile optimised for low velocity planing.

Typically, the floats are mounted on the shaft such that they rotate in a circular motion around an axis of the shaft. However, they may be mounted for non-circular rotation about the axis of the shaft, such as elliptical rotation to thereby generate a pulsing input to the hydraulic system as it moves on the wave.

In one embodiment, the system comprises an anchor for anchoring the hulls. Typically, the anchor comprises a split riser. Ideally, the hull is anchored such that it is disposed in the water bow-on into the waves.

The invention also relates to an electricity generation system suitable for converting wind and wave energy into electricity comprising a power generation system according to the invention, and further comprising an electricity generator operatively connected to the drive train. Typically, the system comprises an electrical power transmission means for transmitting electrical power from the anchored hull. In one embodiment, the electrical power transmission means comprises a cable and electrical slip ring assembly.

The invention also relates to a method of generating electricity comprising a step of positioning an electricity generation system according to the invention in a body of water exposed to wind and wave motion, and converting the wind and wave energy into electricity.

This application presents an integrated system for the conversion of wave and wind energy into electrical energy. The device ideally comprises a multihull vessel with the hulls held aligned and apart from each other by a rigid structure of beams. The hulls are typically anchored either using a conventional mooring system with a split riser - one going to each hull such that the hulls are held bow on into the waves Mounted on each hull is an frame type structure upon which is mounted the wind and wave power capture systems that suitably straddles the two hulls. Typically, mounted on top of and stretching between the frames on each hull is the wind energy capture assembly ideally consisting of a central shaft from which wind vanes rotate outwards radially in the embodiment shown. (One alternative embodiment uses a conventional horizontal axis 3-bladed wind turbine mounted on the highest part of the vessel as a wind capture device.) A wind baffle channels the wind such that only the uppermost vanes are exposed to wind. In both embodiments the captured wind energy is used to drive the lower or wave energy shaft. In the primary embodiment this is achieved via a chain drive and gearbox. In the other embodiment wind turbine electrical output is used to drive a motor that rotates the wave energy shaft at a speed optimised to wave energy capture. Suitably, mounted on the wave energy shaft is the wave energy capture assembly. This typically comprises an array of floats aligned parallel to the shaft but displaced radially from it. In one embodiment the floats are cylindrical and can rotate independently, but in other embodiments these floats can be fixed and have a shape designed to optimise their hydrodynamic performance. As these floats rotate they dip into the ocean and are accelerated to wave speed and driven forward by the action of the waves. In one embodiment shown, each float can move on a linear slide in the float assembly. This linear motion is resisted by a hydraulic cylinder and the resultant energy is channelled via a hydraulic system such that it contributes to wave energy shaft rotation. In an alternative embodiment a 4-bar linkage is used for float vertical displacement and again this energy is captured using a hydraulic cylinder. The wave energy shaft is connected to a generator via an appropriate transmission system.

### Brief Description of the Figures

The invention will be more clearly understood from the following description of some embodiment thereof, given by way of example only, with reference to the accompanying figures in which:
FIG. 1 illustrates an isometric projection of Embodiment 1 of a wind and wave energy conversion system.
FIG. 2 illustrates a simplified three-view projection of Embodiment 1 of a wind and wave energy conversion vessel.
FIG. 3 illustrates an isometric projection Embodiment 2 of a wind and wave energy conversion vessel.
FIG. 4 illustrates a simplified three-view projection of Embodiment 2 of a wind and wave energy conversion vessel.
Fig 5 illustrates a schematic showing a mechanism incorporating a four-bar linkage for capture of energy associated with the vertical displacement of floats.

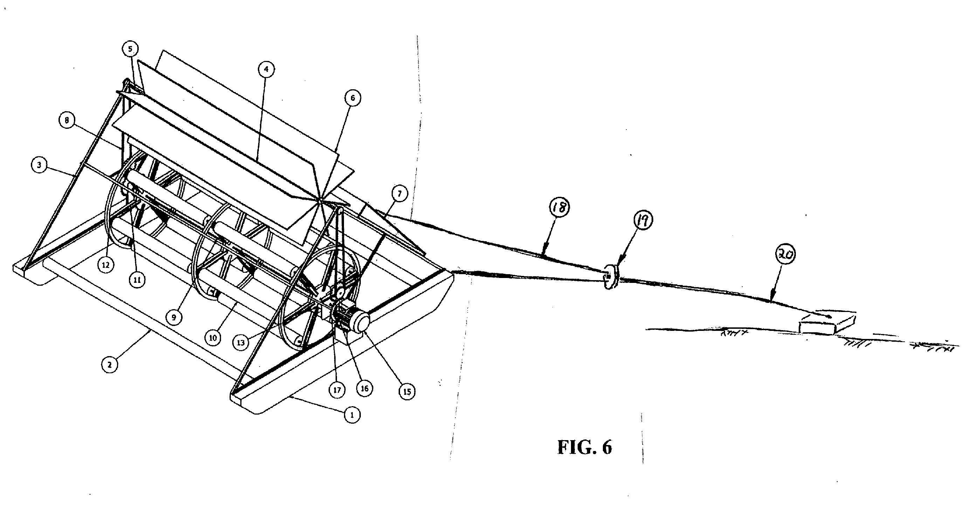

FIG. 6 illustrates an isometric projection of Embodiment 1 of a wind and wave energy conversion system showing the mooring system.

### Detailed Description of the Invention

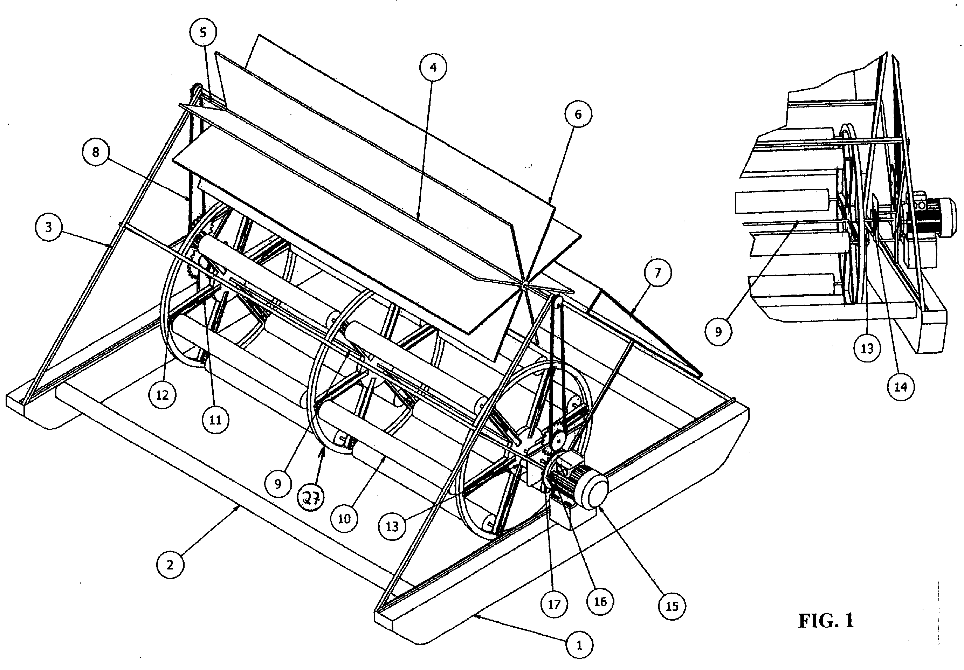

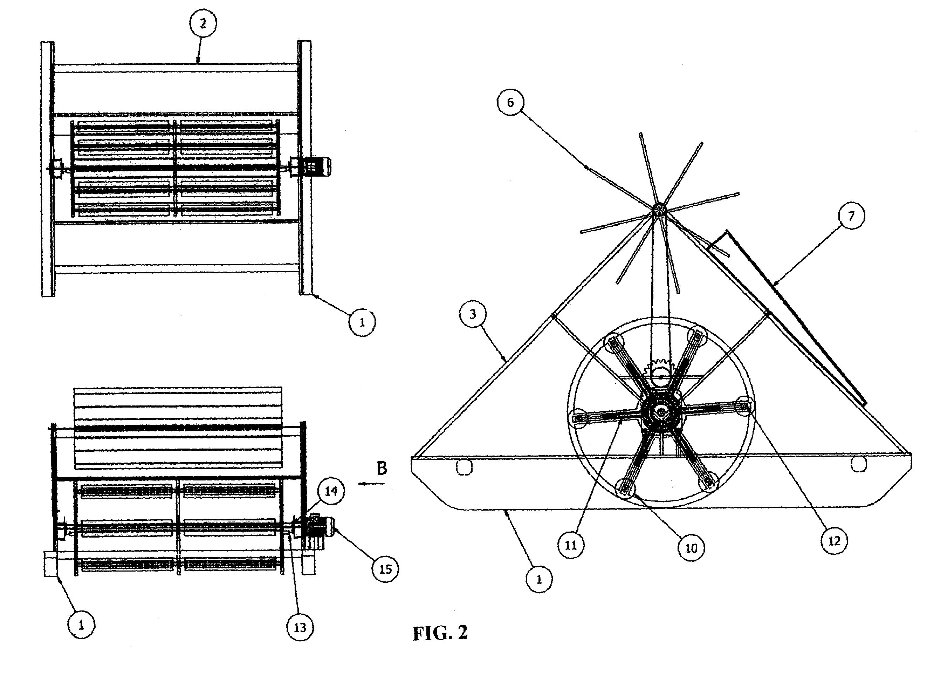

A system for the conversion of wave and wind energy to electrical power. In the embodiment shown in Fig. 1 and Fig. 2 it comprises two hulls (1) which are held apart by crossbeams (2). Mounted on each hull is a frame (3) that provides a support structure for the power generation systems that straddle the space between two hulls. Mounted on top of this frame and stretching between the frames (3) across the two hulls is the wind energy capture assembly (4) which comprises a central shaft (5) to which the wind vanes (6) are attached and from which they project radially. Channelling the wind such that only the upper vanes are exposed is a wind baffle (7) mounted to the frames (3) and extending across the gap between the hulls. As the wind energy shaft (5) rotates under the influence of the wind it drives a conventional drive train (8) consisting in this instance of belt or chain and gearbox. An alternative embodiment could use bevel gears and shaft to transmit drive from the upper shaft (5) to the lower or wave energy shaft (9). The output of the wind capture assembly (4) is connected to the lower or wave energy shaft (9) causing it to rotate in a direction opposite to the wind energy shaft. Mounted on and integral with the wave energy shaft is the wave energy capture assembly. This comprises an array of floats (10) held in a circular frame (27) so that they are aligned parallel to the shaft (9) but displaced radially from it. In the embodiment shown the floats are cylindrical and can rotate independently but in other embodiments these floats can be fixed and have a shape designed to optimise their hydrodynamic performance and their planing performance. As these floats rotate they dip into the ocean and are accelerated and driven forward by the action of the waves. The displacement of the vessel or its freeboard is such as to optimise the depth to which these floats are immersed. In the embodiment shown each float can move on a linear slide (12) in the float assembly frame (27). This mechanism enables the path of contact of the float with the waves to be extended and also enables the energy inherent in the waves forcing the float upward be harvested and converted to a torque that can then be applied to the wave energy shaft. This linear motion is resisted by a hydraulic cylinder (11) and the resultant energy is channelled via a hydraulic system to a hydraulic motor and gear (13), both integral to the wave energy assembly, and rotating as a planetary drive on a fixed gear (14) that is attached to the frame (3) thereby imparting a contributory rotational motion to the rotational motion of the wave energy shaft. The wave energy shaft is connected to a generator (15) via a gearbox (16) and flywheel (17).

The hulls are anchored using a conventional mooring system with a cable/chain (18) from the bow of each hull connected to a swivel (19). Below the swivel a single chain/cable system (20) runs to a mooring block/anchor on the seabed/river bed/lakebed. Electrical power is fed from the vessel via a heavy duty electrical slip ring with the electrical cable running through the centre of the swivel as per existing rotary unions used in offshore oil sector technology.

### Other embodiments of the above system are:

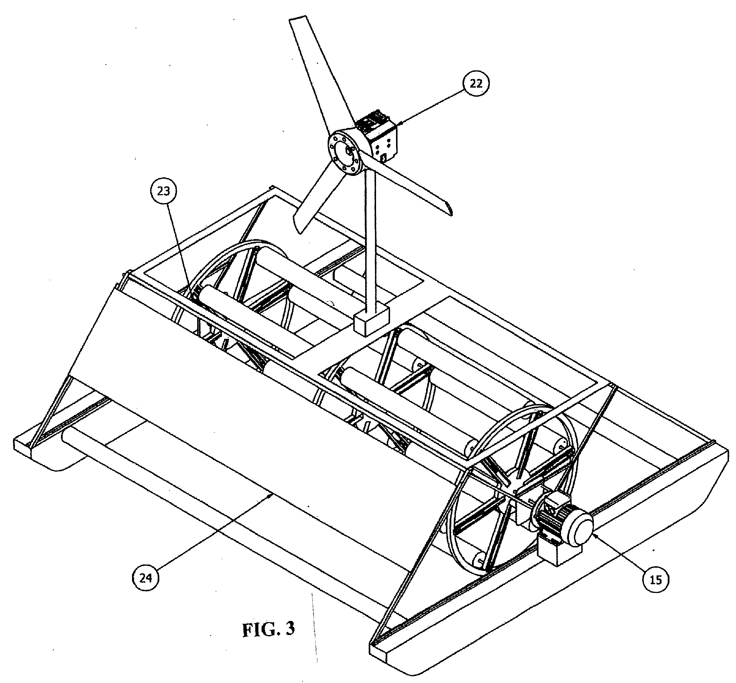

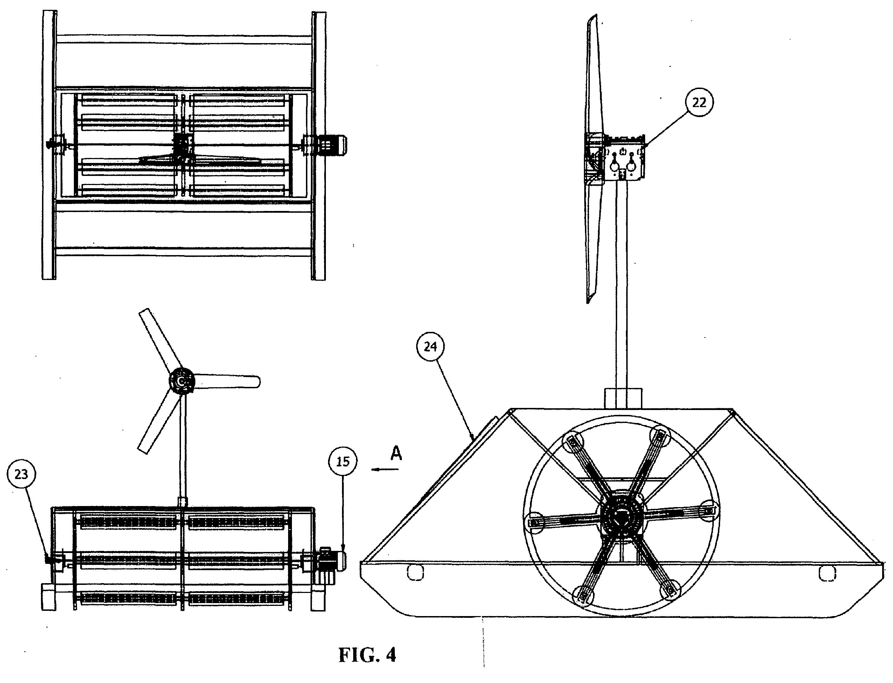

In other embodiments the wind energy capture system and drive system are replaced by one or multiple conventional horizontal axis wind turbine (22) mounted on the support structure as shown or alternatively on the hulls as shown in Fig 3 and Fig. 4. The generator electrical output is supplied to an electric motor (23) with an integral motor speed control system designed to drive the wave generator shaft at an optimal speed for float/wave interaction. In this case the wind baffle (24) is modified so as to shield only the wave energy floats as they rotate to windward.

In an alternative embodiment an external source of power is provided to the vessel and used to rotate the wave energy capture assembly at an optimal speed for wave/float interaction.

In other embodiments a rack and pinion, power screw, ballscrew, or some other form of linear drive may be used to convert movement of the floats directly to rotational motion and thence provide rotational drive to an electrical generator without using a hydraulic system of power transmission and without transferring the energy via the wave energy shaft.

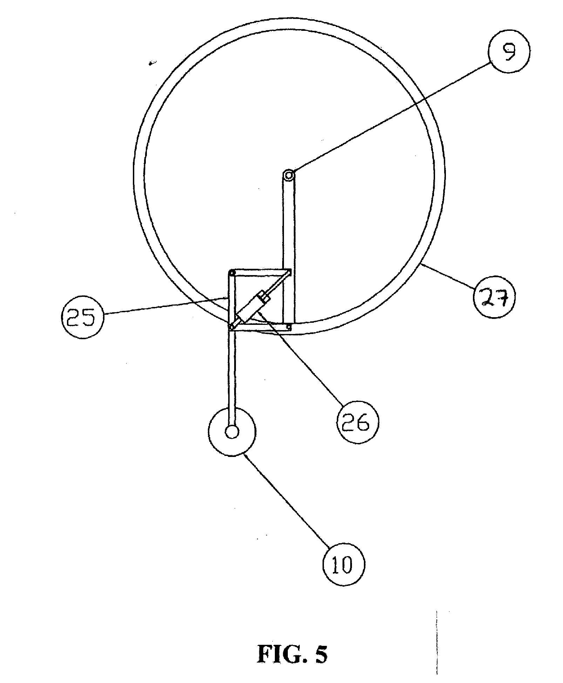

In other embodiments the linear slide system with hydraulic cylinder to facilitate float vertical motion and capture the resultant energy release is instead replaced with 4-bar linkage system (25) with a hydraulic cylinder resisting linkage motion and thereby capturing wave energy released as the floats move vertically in response to wave action (Fig. 5).

In other embodiments springs are used in conjunction with either the hydraulic or linear drive system as stabilising, stiffening and energy storage elements.

In other embodiments the simple roller float system with shafts running centrally through each roller is replaced with roller floats mounted eccentrically to generate a pulsing input to the hydraulic system as the floats spin as they are pushed forward by wave action.

In other embodiments multiple hulls, as in more than two, are aligned parallel and wind and wave energy capture systems are extended between all hulls.

| **List** | **No.** |
|---|---|
| Hulls | 1 |
| Crossbeams | 2 |
| Frames | 3 |
| Wind energy capture assembly | 4 |
| Wind energy central shaft (upper horizontal shaft) | 5 |
| Radial wind vanes/fins | 6 |
| Wind baffle | 7 |
| Drive train between wind and wave energy shafts | 8 |
| Wave energy central shaft (lower horizontal shaft) | 9 |
| Floats | 10 |
| Hydraulic cylinder | 11 |
| Linear slider for float radial displacement | 12 |
| Hydraulic motor and planet gear | 13 |
| Fixed gear for planetary drive | 14 |
| Generator | 15 |
| Gearbox | 16 |
| Flywheel | 17 |
| Mooring cable/chain | 18 |
| Swivel | 19 |
| Mooring block and primary mooring chain/cable | 20 |
| Horizontal axis wind turbine - 2^{nd} Embodiment | 22 |
| Electric motor - 2^{nd} Embodiment | 23 |
| Wind baffle - 2^{nd} Embodiment | 24 |
| 4 bar linkage | 25 |
| Hydraulic cylinder | 26 |
| Frame for floats | 27 |

The invention is not limited to the embodiment hereinbefore described which may be varied in construction and detail without departing from the spirit of the invention.

## Claims

1. A power generation system suitable for converting wind and wave energy into movement of a drive train comprising
a hull adapted for being anchored,
drive means supported on the hull and adapted to drive a wave energy capture assembly supported on the hull, the wave energy capture assembly comprising a plurality of floats mounted radially about a shaft for rotation with the shaft, and
a drive train operatively connected to the shaft,
wherein the wave energy capture assembly is disposed with respect to the hull such that when the system is in the water the floats rotate with the shaft and dip into the water, wherein the floats are driven forward by the action of the waves and accelerated to wave speed.

2. A system as claimed in Claim 1 in which the drive means comprises a wind energy capture assembly.

3. A system as claimed in Claim 2 in which the anchored hull comprises a pair of spaced apart hulls, and wherein wind and wave energy capture assemblies and the drive train are mounted between the hulls.

4. A system as claimed in any preceding Claim in which the floats are mounted on the shaft for radial movement towards and away from the shaft in response to the height of the waves.

5. A system as claimed in Claim 5 in which the floats are biased away from the shaft, wherein movement of the float against the bias generates energy which is employed to contribute to shaft rotation.

6. A system as claimed in Claim 6 in which the floats are biased away from the shaft by means of a hydraulic cylinder which is operatively connected to a hydraulic motor.

7. A system as claimed in any preceding Claim including a wind flow optimisation system that shields the floats and/or wind energy capture assembly from negative wind loading.

8. A system as claimed in any preceding Claim in which the floats are cylindrical.

9. An electricity generation system suitable for converting wind and wave energy into electricity comprising a system as claimed in any of Claims 1 to 13, and further comprising an electricity generator operatively connected to the drive train.

10. A method of generating electricity comprising a step of positioning a system according to any of Claims 14 to 16 in a body of water exposed to wind and wave motion, and converting the wind and wave energy into electricity.
